# EUROPEAN PATENT APPLICATION

(11) **EP 4 368 682 A1**
(43) Date of publication of application: **15.05.2024**
(21) Application number: 22315277.8
(22) Date of filing: 10.11.2022
(51) Int. Cl.: C09J 153/02, C08L 75/06, B32B 27/32, C09J 7/38

(54) **HOT MELT PRESSURE-SENSITIVE ADHESIVE COMPOSITION**

(71) Applicant: Bostik SA, 92700 Colombes (FR)
(72) Inventor: Baskar, Kanagaraj, 561229 BANGALORE (IN); Chidambaram, Rajesh, 561229 BANGALORE (IN); Bhushan, Abhishek, 561229 BANGALORE (IN)
(74) Representative: Arkema Patent

(57) **Abstract**

The present invention relates to a hot melt pressure-sensitive adhesive composition comprising:
- at least one styrene block copolymer (C);
- a thermoplastic polyurethane ; and
- a tackifying resin;
and its uses.

## Description

### TECHNICAL FIELD

The present invention relates to a hot melt pressure-sensitive adhesive composition, and its uses.

### TECHNICAL BACKGROUND

Pressure-sensitive adhesives (PSAs) are substances that give the support layer which is coated therewith an immediate tack at ambient temperature (23°C). This immediate tack enables the instantaneous adhesion of said self-adhesive support to all types of substrates, under the effect of a gentle and brief pressure. PSAs are widely used for the manufacture of self-adhesive labels which are attached to articles (for example packaging) for the purpose of presenting information (such as barcode, name, price) and/or for decorative purposes. PSAs are also employed in the manufacture of self-adhesive tapes of varied uses. Mention may be made, for example, besides the transparent adhesive tape widely used in daily life, of the forming and the assembling of cardboard packagings; the protection of surfaces for painting operations, in the building industry; the maintenance of electric cables in the transportation industry: the adhesive bonding of fitted carpets by double-sided adhesive tapes.

Hot-melt adhesives or hot melts (HMs) are substances that are solid at ambient temperature and contain neither water nor solvent. They are applied in the melt state and solidify on cooling, thus forming a joint which, due to its adhesive strength, attaches the substrates to be assembled. Certain hot melts are formulated in such a way as to give the support coated therewith a relatively hard and tack-free character. Other hot melts provide the support with a relatively soft character and a high tack; these are PSAs which are widely used for the manufacture of self-adhesive articles (for example self-adhesive labels). The corresponding adhesives are denoted by the designation "hot-melt pressure-sensitive adhesives" (or HMPSA). HMPSA are thus a different category than hot melt. HM. They therefore also make it possible, owing to their adhesive strength, to firmly attach the label or the tape to the desired substrate, whether it is for example packaging to be labeled or board to be assembled.

HMPSAs are generally applied, by continuous coating processes carried out by industrial machines known as "coaters", over the whole of the surface of a large-sized support layer, where appropriate which is printable, in an amount (generally expressed in g/m²) denoted hereinbelow by the term "weight per unit area". The support layer generally consists of paper or of film of a polymeric material having one or more layers. The layer of self-adhesive composition which covers the support layer is itself covered with a protective nonstick layer (often known as a release liner), which often consists of a silicone coating. The multilayer system obtained is generally packaged by winding in the form of large reels (or rolls) up to 2 m in width and 1 m in diameter, which can be stored and transported, such packaging often being referred to by the expression "roll stock".

This multilayer system can subsequently be converted into self-adhesive labels which can be applied by a label manufacturer referred to as a "converter", by means of conversion processes which include the printing of desired informative and/or decorative elements onto the printable face of the support layer, followed by die-cutting to the desired shape and sizes, and matrix stripping to leave labels on a release liner. It is important that the cutting action breaks the support layer (face stock) and adhesive layer, but does not indent the release liner. Producing a series of labels on a backing sheet involves cutting around the label and removing the material between two labels (the matrix) while leaving the label itself attached to the backing sheet. It is important that the die-cutting machine make a clean break at operating speeds. Adhesives for these applications are formulated to have suitable viscoelastic and adhesive properties so that they can be applied to the release liner or support layer back and will remain on the label after stripping with the required adhesion. But these properties make the adhesive film difficult to cut or break. They make die-cutting difficult and inconsistent, and cause adhesive strings and deposits on the cutting blade. Die-cutting involves cutting the laminate through to the release liner face.

The cost of converting a laminate into a finished product, such as a label, is a function of the various processing operations' rates. Line speed depends on whether a printing step is involved. With printing step speeds of 50-100 meters/minute are typical. While all laminate layers impact convertibility cost, the adhesive layer can limit convertibility ease. The adhesive layer's viscoelastic nature causes this limitation-its high elasticity prevents it from flowing away from the cut line during die-cutting and also promotes its transfer to cutting blades during cutting. High adhesive elasticity also causes adhesive stringiness, which hinders matrix stripping as the unwanted facing material is removed after die-cutting.

Achieving good convertibility does not necessarily coincide with achieving excellent adhesive performance. Adhesives must be formulated to fit needs. Important adhesive properties include peel adhesion, tack, shear, and viscosity at various temperatures and on various substrates such as polymers, papers, glasses, and steels. Good, general-purpose adhesives may exhibit poor convertibility simply because the adhesive is difficult to cleanly sever. The adhesive may stick to a die or blade. Furthermore, within a speed range, use of a particular adhesive may result in breaking the matrix despite the fact that successful matrix stripping can occur at speeds on either side of the breaking speed.

There exist label/tape adhesives produced from acrylic polymer solutions. However, these systems typically require large volume of solvent and subsequent solvent removals, which is not economically and environmentally recommended. Besides, those systems do not perform well at low application temperature (such as for example 0°C or lower).

Hot melt pressure sensitive adhesives also exist. However, most of them do not have combined good adhesive properties with optimum die-cutting properties.

There is thus a need for providing a hot melt pressure sensitive adhesives that allows to resolve at least a part of the above-mentioned drawbacks.

More particularly, there is a need for hot melt pressure sensitive adhesives having a good compromise between good die-cutting performances, good rheological properties, and good adhesive properties.

There is a need for hot melt pressure sensitive adhesives exhibiting improved die-cutting performances, and more particularly allowing reaching high die-cutting speed, preferably higher or equal to 100 m/min. There is thus a need for hot melt pressure sensitive adhesive improving production process at the customer end.

There is a need for hot melt pressure sensitive adhesives having reduced viscosity enabling coating at lower application temperature.

There is a need for hot melt pressure sensitive adhesives having good wettability, more particularly good wettability on paper substrates.

### DESCRIPTION OF THE INVENTION

The present invention relates to a hot melt pressure-sensitive adhesive composition comprising:
- at least one styrene block copolymer (C);
- a thermoplastic polyurethane ; and
- a tackifying resin.

### Styrene block copolymer (C)

Typically, the styrene block copolymer has at least one A block that includes styrene or styrene derivatives, and at least one B block that includes, e.g., elastomeric conjugated dienes (e.g., hydrogenated and unhydrogenated conjugated dienes), sesquiterpenes (e.g., hydrogenated and nonhydrogenated sesquiterpenes), and combinations thereof.

The A blocks and the B blocks bind to one another in any manner of binding such that the resulting copolymer exhibits a variety of structures including, e.g., random, straight-chained, branched, radial, star, comb, tapered, and combinations thereof. The block copolymer can exhibit any form including, e.g., linear A-B block, linear A-B-A block, linear A-(B-A)n-B multi-block, and radial (A-B)n-Y block where Y is a multivalent compound and n is an integer of at least 3, tetrablock copolymer, e.g., A-B-A-B, and pentablock copolymers having a structure of A-B-A-B-A.

Suitable styrene A blocks may include styrene, alpha-methylstyrene, o-methylstyrene, m-methylstyrene, p-methylstyrene, p-tert-butylstyrene, 2,4-dimethylstyrene, 2,4,6-trimethylstyrene, and combinations thereof.

Suitable block elastomeric conjugated diene B blocks may include, butadiene (e.g., polybutadiene), isoprene (e.g., polyisoprene), 2,3-dimethyl-1,3-butadiene, 1 ,3-pentadiene, 1,3-hexadiene, and combinations thereof, and hydrogenated versions thereof including, e.g., ethylene, propylene, butylene and combinations thereof.

Suitable B block sesquiterpenes may include beta farnesene.

Preferably, the styrene block copolymer (C) comprises, preferably consists essentially of, and more preferably consists of:
- at least one linear styrene block copolymer (C1); and
- optionally at least one styrene diblock copolymer (C2).

The linear styrene block copolymer (C1) is preferably selected from the group consisting of: styrene-butadiene-styrene copolymer (SBS), styrene-isoprene-styrene copolymer (SIS), styrene-ethylene-butylene-styrene copolymer (SEBS), styrene-butadiene-butylene-styrene copolymer (SBBS), styrene-ethylene-propylene-styrene copolymer (SEPS), styrene-isoprene-butadiene-styrene (SIBS) and any mixture thereof. Even more preferably, the linear styrene block copolymer (C1) is a styrene-isoprene-styrene copolymer (SIS).

The diblock styrene copolymer (C2) is preferably selected from the group consisting of: styrene-butadiene diblock copolymer (SB), styrene-isoprene diblock copolymer (SI), styrene-ethylene-butylene diblock copolymer (SEB), styrene-ethylene-propylene diblock copolymer (SEP), styrene-butylene-butene (SBB), and mixtures thereof.

The diblock content in styrene block copolymer (C) refers to the proportion by weight of styrene diblock copolymer (C2) included in said styrene block copolymer (C).

Preferably, the diblock content ranges from 5% to 90 % by weight, more preferably from 10% to 80% by weight, and even more preferably from 20% to 70% by weight based on the total weight of styrene block copolymer (C).

The styrene content in the styrene block copolymer (C) refers to the proportion by weight of styrene based polymer blocks included in the styrene block copolymer (C).

Preferably, the styrene block copolymer (C) has a styrene content ranging from 2% to 50% by weight, more preferably from 5% to 40% by weight, and even more preferably from 10% to 30% by weight based on the total weight of said styrene block copolymer (C).

The styrene block copolymer (C) has preferably a melt flow index (200°C/ 5kg) lower than or equal to 50 g/10 min, more preferably lower than or equal to 30 g/10 min, even more preferably ranging from 2 to 20 g/10 min.

The melt flow index may be measured at 200°C/5 kg according to ASTM D1238.

The useful styrene block copolymer (C) can be prepared from at least one substituted or non-substituted styrene monomer and at least one conjugated diene monomer, by any block polymerization method well known in the art to form in particular a mixture of linear type styrene block copolymer and optional styrene diblock copolymer.

The useful styrene block copolymers (C) are also commercially available. By way of example of useful styrene block copolymers (C) which are commercially available, mention may be made in particular of Vector^{®}4411 sold by TSRC (linear styrene-isoprene-styrene block copolymer having a styrene content ranging of 44% by weight and a diblock content less than 1% by weight) ; Kraton^{®} D1162 sold by KRATON (linear styrene-isoprene-styrene block copolymer having a styrene content ranging of 43% by weight and a diblock content less than 1% by weight); SIS^{®}1124 sold by SINOPEC (linear styrene-isoprene-styrene block copolymer having a styrene content ranging of 14% by weight and a diblock content of 25% by weight) ; JH8161 sold by Ningbo Jinhai Chenguang Chemical Corporation (linear styrene-isoprene-styrene block copolymer having a styrene content ranging of 16% by weight and a diblock content of 50% by weight).

The styrene block copolymer (C) is preferably selected from the group consisting of styrene-butadiene (SB), styrene-butadiene-styrene (SBS), styrene-isoprene block (SI), styrene-isoprene-butadiene-styrene (SIBS), styrene-isoprene-styrene (SIS), styrene-ethylene-butylene-styrene (SEBS), styrene-ethylene-propylene-styrene (SEPS), styrene-ethylene-butylene (SEB), styrene-ethylene-propylene (SEP), styrene-isobutylene-styrene, and combinations thereof. It is even more preferably a mixture SIS and SI.

The hot melt pressure sensitive adhesive composition may comprise from 1% to 60% by weight of styrene block copolymer(s), preferably from 5% to 50% by weight, even more preferably from 10% to 40% by weight, based on the total weight of said hot melt pressure sensitive adhesive composition.

### Thermoplastic polyurethane

Thermoplastic polyurethanes are well known and may be generally described as block copolymers, having one or more low glass transition temperature (Tg) soft segments (or blocks) and one or more high Tg hard segments (or blocks).

The thermoplastic polyurethane is preferably a thermoplastic polyurethane elastomer.

The thermoplastic polyurethane is preferably the reaction product of at least one polyol, at least one polyisocyanate, and optionally at least one chain extender.

### Polyisocyanate

The polyisocyanate may be selected from diisocyanates, triisocyanates and mixtures thereof.

The polyisocyanate may be monomeric, oligomeric or polymeric.

The polyisocynate may be an aromatic or an aliphatic polyisocyanate.

Preferably, the polyisocyanate is a diisocyanate, more preferably selected from the group consisting of: isophorone diisocyanate (IPDI), hexamethylene diisocyanate (HDI), heptane diisocyanate, octane diisocyanate, nonane diisocyanate, decane diisocyanate, undecane diisocyanate, dodecane diisocyanate, 2,4'-methylenebis(cyclohexylisocyanate) (2,4'-H6MDI), 4,4'-methylenebis(cyclohexylisocyanate) (4,4'-H6MDI), norbornane diisocyanate, norbornene diisocyanate, 1,4-cyclohexane diisocyanate (CHDI), methylcyclohexane diisocyanate, ethylcyclohexane diisocyanate, propylcyclohexane diisocyanate, methyldiethylcyclohexane diisocyanate, cyclohexane dimethylene diisocyanate, 1,5-diisocyanato-2-methylpentane (MPDI), 1,6-diisocyanato-2,4,4-trimethylhexane, 1,6-diisocyanato-2,2,4-trimethylhexane (TMDI), 4-isocyanatomethyl-1,8-octane diisocyanate (TIN), (2,5)-bis(isocyanatomethyl)bicyclo[2.2.1]heptane (2,5-NBDI), (2,6)-bis(isocyanatomethyl)bicyclo[2.2.1]heptane (2,6-NBDI), bis(isocyanatomethyl)cyclohexane (H6-XDI) (in particular 1,3-bis(isocyanatomethyl)cyclohexane (1,3-H6-XDI)), xylylenediisocyanate (XDI) (in particular m-xylylene diisocyanate (m-XDI)), toluene diisocyanate (in particular 2,4-toluene diisocyanate (2,4-TDI) and/or 2,6-toluene diisocyanate (2,6-TDI)), diphenylmethane diisocyanate (in particular 4,4'-diphenylmethane diisocyanate (4,4'-MDI) and/or 2,4'-diphenylmethane diisocyanate (2,4'-MDI)), tetramethylxylylene diisocyanate (TMXDI) and mixtures thereof.

The polyisocyanate is preferably an aromatic polyisocyanate, even more preferably selected from toluene diisocyanate, diphenylmethane diisocyanate, and mixtures thereof.

There exist polyisocyanates commercially available such as for example SCURANATE^{®} TX commercialized by VENCOREX (2,4-TDI with a purity of 95%), SCURANATE^{®} T100 commercialized by VENCOREX (2,4-TDI with a purity higher than 99), « DESMODUR^{®} I» commercialized by COVESTRO (IPDI).

### Polyol

The polyol may have a number average molecular weight (Mn) ranging from 200 g/mol to 20 000 g/mol, preferably from 400 g/mol to 18 000 g/mol.

The number average molecular weight may be calculated via the hydroxyl index (IOH) expressed in mg KOH/g and the functionality of the polyol, or determined by well-known methods such as by GPC with PEG standard.

Preferably, the polyol has a hydroxyl functionality ranging from 2 to 6.

In the present invention, the hydroxyl functionality of a polyol is the average number of hydroxyl function per mol of polyol.

The polyol may be selected from the group consisting of polyester polyols, polyether polyols, and mixture thereof.

Polyester polyols are well known to the skilled person, and may be obtained by reaction of a carboxylic acid (or derivatives) and polyols.

Polyester polyols typically include polycarbonate polyols, polycaprolactone polyester polyols.

The polycaprolactone polyester polyols may be polyester diols derived from caprolactone monomers. The polycaprolactone polyester polyols may be terminated by primary hydroxyl groups. Suitable polycaprolactone polyester polyols may be made from ε-caprolactone and a bifunctional initiator such as di ethylene glycol, 1,4-butanediol, or any of the other glycols and/or diols listed herein. Examples include CAP A^{™} 2101 A (a 1000 number average molecular weight (Mn) linear polyester diol), CAP A^{™} 2202A (a 2 000 Mn linear polyester diol) commercially available from Perstorp Polyols Inc.

Polycarbonate polyols may be obtained by reaction of diols such as for example propylene glycol, butanediol-1,4 or hexenediol-1,6, diethyleneglycol, triethyleneglycol and mixtures thereof, with carbonates such as for example diarylcarbonates or dialkylcarbonates.

Polyesters polyols may be obtained by reacting:
- diols such as for example 1 ,4-butanediol, hydroquinone bis(2-hydroxyethyl)ether, ethylene glycol, diethylene glycol, triethylene glycol, propylene glycol, dipropylene glycol, 2-methyl-2-ethyl-1,3 propanediol, 2-ethyl-1,3-hexanediol, 1 ,5-pentanediol, thiodiglycol, 1 ,3-propanediol, 1,3-butanediol, 2,3-butanediol, neopentyl glycol, I,2-dimethyl-I,2-cyclopentanediol, 1,6-hexanediol, 1,2-cyclohexanediol, I,2-dimethyl-I,2-cyclohexanediol, glycerol, trimethylol propane, trimethylol ethane, 1,2,4-butanetriol, 1,2,6-hexanetriol, pentaerythritol, dipentaerythritol, tripentaerythritol, anhydroaneaheptitol, mannitol, sorbitol, methyl-glucoside, and the like, and mixtures thereof;
- with carboxylic acids such as for example adipic acid, succinic acid, glutaric acid, azelaic acid, sebacic acid, malonic acid, maleic acid, fumaric acid, phthalic acid, isophthalic acid, terephthalic acid, tetrachlotophthalic acid and chlorendic acid; their acid anhydrides, alkyl esters and acid halides, and mixtures thereof.

Polyether polyols may be selected from polyoxyalkylene-polyol, with the alkylene moiety, linear or branched, comprises from 1 to 6 carbon atoms.

Polyether polyols may be selected from polyalkylene-diols or polyoxyalkylene triols, with the alkylene moiety, linear or branched, comprises from 1 to 6 carbon atoms.

As example of polyoxyalkylene diols or triols, there are:
- polyoxypropylene diols or triols (called polypropylene glycol (PPG) diols or triols) having a Mn ranging from 300 to 20 000 g/mol;
- polyoxyethylene diols or triols (called polyethylene glycol (PEG) diols or triols) having a Mn ranging from 300 to 15 000 g/mol;
- polyoxybuylene diols or triols (called PBG diols or triols having a Mn ranging from 300 to 20 000 g/mol ;
- polytetramethylene diols or triols (called PolyTHF or PTMEG) having a Mn ranging from 300 to 4 000 g/mol ;
- copolymers or terpolymers diols or triols based on ethylene oxide, propylene oxide, and/or butylene oxide ;
- and mixtures thereof.

Polyether polyols may be prepared conventionally or are commercially available. Preferably, the polyol is selected from polyester polyols.

### Chain extenders

The chain extenders typically include diols, diamines, and combination thereof.

Suitable examples of diols as chain extenders are small diols having lower aliphatic or short chain glycols having from 2 to 20 or 2 to 10 carbon atoms.

Suitable examples of diols as chain extenders are ethylene glycol, diethylene glycol, propylene glycol, dipropylene glycol, 1,4-butanediol (BDO), 1,6-hexanediol (HDO), 1,3-butanediol, 1,5-pentanediol, neopentylglycol, 1,4-cyclohexanedimethanol (CHDM), 2,2-bis[4-(2- hydroxyethoxy) phenyljpropane (HEPP), heptanediol, nonanediol, dodecanediol, and mixtures thereof.

Suitable examples of diamines as chain extenders include ethylenediamine, butanediamine, hexamethylenediamine, and hydroxyethyl resorcinol (HER), and mixtures thereof.

### Thermoplastic polyurethane

The thermoplastic polyurethane may have a weight average molecular weight (Mw) ranging from 50 000 to 600 000 g/mol, preferably from 100 000 to 500 000 g/mol.

The number average molecular weight of the thermoplastic polyurethane may be measured by GPC using polystyrene as standard.

The thermoplastic polyurethane is preferably selected from the group consisting of polyester-based thermoplastic polyurethane, polyether-based thermoplastic polyurethane, and mixtures thereof. The thermoplastic polyurethane is preferably selected from polyester-based polyurethane.

The thermoplastic polyurethane may be obtained by conventional method, for examples in one or two steps. The reaction may be carried out in presence of a catalyst. Typical catalysts include organotins, tertiary amines, or zinc salts.

There also exists some commercial thermoplastic polyurethane. Mention may be made for example the series « ELASTOLLAN^{®} » commercialized by BASF, the series « Estane^{®} » commercialized by LUBRIZOL, the series « DESMOPAN^{®} » commercialized by COVESTRO or the series « Pellethane^{®} » commercialized by DOW. For example, there is Pellethane^{®} 2103-70A (more than 98% obtained from methylenediphenyldiisocyanate, 1,4-butanediol and polytetramethylene glycol), or Elastollan^{®} 1170 A10, 1175 A10W from BASF, FJ-146P from FWU JI RESINS CHEMICALS (polyester based aromatic thermoplastic polyurethane), Pearlbond^{™} 5717 NT2 commercialized by LUBRIZOL (polyester type thermoplastic polyurethane).

The thermoplastic polyurethane elastomer may have a hardness Shore A ranging from 50 to 80, preferably from 60 to 80. Hardness shore A may be measured as disclosed in ASTM-2240.

The thermoplastic polyurethane may have a Melt flow index (MFI) ranging from 5 to 25 g/10 min, preferably from 8 to 22 g/10 min. MFI may be measured according to ASTM D1238 at 160°C/2.16kg.

The thermoplastic polyurethane may have a density ranging from 0.80 to 2 g/cm³, preferably from 1.0 to 1.5 g/cm³.

The density may be measured according to ASTM D-792.

The hot melt pressure sensitive adhesive composition may comprise from 1% to 55% by weight of the thermoplastic polyurethane (or of the mixture of thermoplastic polyurethanes in case a plurality of thermoplastic polyurethanes is present in the hot melt pressure sensitive adhesive composition), preferably from 2% to 40% by weight, even more preferably from 4% to 30% by weight, and event more advantageously from 4% to 20% by weight based on the total weight of said hot melt pressure sensitive adhesive composition.

### Tackifying Resin (or tackifier)

Suitable tackifying resin for the invention are preferably those which are compatible with the styrene block copolymer (C).

The tackifying resin may be selected from the group consisting of:
- i) Aliphatic and cycloaliphatic petroleum hydrocarbon resins, resulting from the polymerization of monomers consisting primarily of aliphatic or cycloaliphatic olefins and di-olefins, and the hydrogenated derivatives thereof;
- ii) Aromatic petroleum hydrocarbon resins and the hydrogenated derivatives thereof;
- iii) Aromatic-modified cycloaliphatic and aromatic-modified aliphatic petroleum hydrocarbon resins, and the hydrogenated derivatives thereof;
- iv) The homopolymers of terpene resins (for example obtained by polymerization of terpene hydrocarbons such as mono-terpene), and the hydrogenated derivatives thereof;
- v) Copolymers and terpolymers of natural terpenes (*e.g*. styrene/terpene, α-methyl styrene/terpene and vinyl toluene/terpene);
- vi) Phenolic-modified terpene resins (for example the resin product resulting from the condensation in an acidic medium of a terpene and a phenol);
- vii) Natural and modified rosin (*for example* gum rosin, wood rosin, tall-oil rosin, distilled rosin, hydrogenated rosin, dimerized rosin, polymerized rosin, rosin esters and their hydrogenated derivatives);
- viii) Glycerol and pentaerythritol esters of natural and modified rosin (*for example* the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall-oil rosin, and the phenolic modified pentaerythritol ester of rosin); and
- ix) Mixtures thereof.

In particular, from those of types defined above, the following products may be mentioned:
- resins of type i) : Escorez^{®}5400 which is a hydrogenated dicyclopentadiene resin available from Exxon Chemicals with a softening temperature of 103°C; Sukorez ^{®}SU210 sold by Kolon Company which is a partially hydrogenated aliphatic and cycloaliphatic petroleum derived hydrocarbon resin having a softening point of 110°C; HAITACK^{™} JH-3204 sold by Ningbo Jinhai Chenguang Chemical Corporation (C5 aliphatic resin);
- resins of type ii) : Regalite^{®} S7125 (resin C9 partially hydrogenated) from Eastman Chemical Company; Plastolyn^{®} P290 (aromatic hydrocarbon resin) sold by EASTMAN;
- resins of type iii): Escorez^{®} 2203LC (aromatic modified aliphatic hydrocarbon resin) from ExxonMobil Chemical company; Quintone^{®} D100 commercialized by ZEON CHEMICAL : C9-modified C5 hydrocarbon resin; HAITACK^{™} JH-3200 sold by Ningbo Jinhai Chenguang Chemical Corporation (aromatic modified C5 aliphatic resin);
- resins of type iv) : polyterpene tackifiers from Arizon Chemical company sold under the trade name Sylvagum^{®} TR and Sylvares^{®} TR series (7115, 7125, M1115);
- resins of type v) : Arkon^{®} series from Arakawa, and Hikotack^{®} series from Kolon which are produced from C9 monomers;
- resins of type vi) : Dertophene^{®} 1510 available from the company DRT : Dertophene^{®}H150, and Sylvarez^{®} TP95 available from Arizone Chemical which are phenolic-modified terpene resins;
- resins of type vii) : Foral^{®} DX from Pinova Inc., and Foral AX-E from Eastman company which are hydrogenated rosin resin;
- resins of type viii) : Sylvalite^{®}RE 100 which is an ester or rosin and pentaerythritol available from Arizone Chemical.

Preferably, the tackifying resin is selected from the group consisting of:
- i) Aliphatic and cycloaliphatic petroleum hydrocarbon resins, resulting from the polymerization of monomers consisting primarily of aliphatic or cycloaliphatic olefins and di-olefins, and the hydrogenated derivatives thereof;
- ii) Aromatic petroleum hydrocarbon resins and the hydrogenated derivatives thereof;
- iii) Aromatic-modified cycloaliphatic and aromatic-modified aliphatic petroleum hydrocarbon resins, and the hydrogenated derivatives thereof;
- vii) Natural and modified rosin (*for example* gum rosin, wood rosin, tall-oil rosin, distilled rosin, hydrogenated rosin, dimerized rosin, polymerized rosin, rosin esters and their hydrogenated derivatives);
- viii) Glycerol and pentaerythritol esters of natural and modified rosin (*for example* the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall-oil rosin, and the phenolic modified pentaerythritol ester of rosin); and
- ix) Mixtures thereof.

The hot melt pressure sensitive adhesive composition may comprise from 20% to 60% by weight of the tackifier (or of the mixture of tackifiers in case a plurality of tackifiers is present in the hot melt pressure sensitive adhesive composition), preferably from 30% to 60% by weight, even more preferably from 40% to 60% by weight based on the total weight of said hot melt pressure sensitive adhesive composition.

The hot melt pressure sensitive adhesive composition preferably comprises a mixture of at least two tackifying resins.

### Plasticizer

The hot melt pressure sensitive adhesive composition of the present invention may comprise at least one plasticizer. The plasticizer may be a solid or a liquid plasticizer.

The hot melt pressure sensitive adhesive composition may comprise from 0% to 40 %, preferably from about 2% to 35%, more preferably from about 5% to 30 %, by weight, of a plasticizer, based on the total weight of the hot melt pressure sensitive adhesive composition.

The plasticizer may be chosen from the group consisting of naphthenic and paraffinic oils, olefin oligomers, low molecular weight polymers, glycol benzoates, vegetable and animal oils, the derivatives thereof, and their mixtures.

The plasticizer may confer good processability to the hot melt pressure sensitive adhesive composition. Moreover, the plasticizer may also provide desired viscosity control without substantially decreasing the adhesive strength,

Naphthenic oils and paraffinic oils are petroleum-based oils which consist in a mixture of naphthenic hydrocarbons (*e.g*. aliphatic, saturated or unsaturated, C4 to C7-member hydrocarbon rings; preferably aliphatic, saturated or unsaturated, C4 to C6-member rings, including cycloalkanes such as cyclopentane, cyclohexane, cycloheptane), paraffinic hydrocarbons (saturated, linear or branched, alkanes) and aromatic hydrocarbons (aromatic hydrocarbon rings, which may be monocyclic or polycyclic, and preferably aromatic C6-member hydrocarbon rings).

The classification of naphthenic and paraffinic oils is made based on the amount of each type of hydrocarbons in the oil. Typically, paraffinic oils have a paraffinic hydrocarbons content of at least about 50 % by weight; naphthenic oils have a naphthenic hydrocarbons content from about 30 % to about 50 % by weight, relative to the total weight of the plasticizer.

Suitable plasticizers for the invention include those commercially available under the tradenames Nyflex^{®} 223 and Nyflex^{®} 222B (naphtenic oils) from Nynas, Parol^{®} (paraffinic oil), Kaydol^{®} (paraffinic oil) from Sonneborn, Olympus^{®} L500 from Ergon, Primol^{®} 352 and 382 from Exxon Mobil, Calsol^{®} 5550 from Calumet and Karamay KN4010 (naphtenic oils) from Petrochina Karamay Petrochemical Co. LTD, and HN 500A (naphtenic oils) from APAR.

The oligomers may be selected from the group consisting of polypropylene, polybutene, hydrogenated polyisopropene, hydrogenated butadiene, or the like having average molecular weights between about 100 and about 10,000 g/mol.

The vegetable and animal oils may be selected from glycerol esters of fatty acids and polymerization products thereof.

Preferably, the plasticizer is selected from naphthenic and paraffinic oils, and even more preferably it is a naphtenic oil.

### Stabilizers

The hot melt pressure sensitive adhesive composition of the present invention may also include at least one stabilizer (antioxidant).

The hot melt pressure sensitive adhesive composition comprises from about 0% to about 5 %, preferably from 0% to about 3 %, more preferably from about 0.1 % to about 3 %, more preferably from about 0.1% to 2 %, by weight of stabilizer(s) based on the total weight of the hot melt pressure sensitive adhesive composition.

Suitable stabilizers are typically incorporated to help protect the polymers noted above, and thereby the total adhesive system from the effects of thermal and oxidative degradation which normally occurs during the manufacture and application of the adhesive, as well as in the ordinary exposure of the final product to the ambient environment.

Among the applicable stabilizers are for example high molecular weight hindered phenols and multifunction phenols, such as sulfur and phosphorous-containing phenols. Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency and correspondingly, its reactivity; this steric hindrance thus providing the phenolic compound with its stabilizing properties. Representative hindered phenols include: 1,3,5-trimethyl-2,4,6-tris(3-5-di-tert-butyl-4-hydroxybenzyl) benzene; pentaerythritol tetrakis-3(3,5-di-tert-butyl-4-hydroxyphenyl) propionate; n-octadecyl-3(3,5-di-tert-butyl-4-hydroxyphenyl) propionate, 4.4'-methylenebis(4-methyl-6-tert-butylphenol); 2,6-di-tert-butylphenol; 6-(4-hydroxyphenoxy)-2,4-bis(n-octylthio)-1,3,5-triazine; 2,3,6-tris(4-hydroxy-3,5-di-tert-butyl-phenoxy)-1,3,5-triazine; di-n-octadecyl-3,5-di-tert-butyl-4-hydroxybenzylphosphonate; 2-(ri-octyl-thio)ethyl-3,5-di-tert-butyl-4-hydroxybenzoate and sorbitol hexa-3(3,5-di-tert-butyl-4-hydroxy-phenyl)propionate.

Suitable antioxidants are commercially available under the tradenames Irganox^{®} 1010 (tetrakis(methylene(3,5-di-ter-butyl-4-hydroxyhydrocinnamate)) methane), Irgafos^{®} 168 (tris(2,4-ditert-butylphenyl)phosphate) from BASF, and Chinox^{®} 1010 (pentaerythritol tetrakis(3-(3,5-di-tert-butyl-4-hydroxyphenyl) propionate)) from Shuangjian, Evernox^{®} 1010 and Everfos^{®} 168 from Everspring Chemical, Songnox^{®} 10 and 1680 from Songwon.

### Other additives

The hot melt pressure sensitive adhesive composition may further comprise at least one additive, preferably in an amount of from 0% to 5 %, by total weight of the hot melt pressure sensitive adhesive composition.

The additives may be selected from the group consisting of inert colorants (*e.g*. titanium dioxide), fillers (*e.g.* talc, calcium carbonate, clay, silica, mica, wollastonite, feldspar, aluminum silicate, alumina, hydrated alumina, glass microspheres, ceramic microspheres, thermoplastic microspheres and mixtures thereof), surfactants, additional polymers other than styrene block copolymers, crosslinking agents, nucleating agents, reactive compounds, fire-retardant mineral or organic agents, ultraviolet (UV) or infrared (IR) light absorbing agents, and UV or IR fluorescing agents. These optional auxiliary additives are well known in this art.

### Hot-melt pressure sensitive adhesive

The hot melt pressure sensitive adhesive composition may have a glass transition temperature ranging from 5°C to 20°C, preferably from 10°C to 20 °C.

The glass transition temperature may be measured by dynamic mechanical analysis (DMA).

More preferably, the glass transition temperature is measured as disclosed in the experimental part.

The hot melt pressure sensitive adhesive composition may have a softening point ranging from 80°C to 150°C, preferably from 85°C to 120°C. The softening point may be measured by using the ASTM E28 standard.

The hot melt pressure sensitive adhesive composition preferably exhibits a Gardner color ranging from 0.2 to 7, preferably from 1 to 5, and more preferably from 3 to 5.

The Gardner color of a composition is tested according to ASTM D-1544 entitled, "Test Method for Color of Transparent Liquids (Gardner Color Scale)" (50% in toluene).

The hot melt pressure sensitive adhesive composition may have a viscosity at 160°C ranging from 500 to 40 000 mPa.s, preferably ranging from 500 to 10 000 mPa.s, and even more preferably ranging from 1 000 to 6 000 mPa.s.

The hot melt pressure sensitive adhesive composition may have a viscosity at 170°C ranging from 300 to 25 000 mPa.s, preferably ranging from 300 to 10 000 mPa.s, and even more preferably ranging from 1 000 to 5 000 mPa.s.

The viscosity is a Brookfield viscosity measured according to the standard method ASTM method D-3236, using a Brookfield viscometer of the type Spindle 27, at a temperature of 160°C or 170°C.

The hot melt pressure sensitive adhesive composition according to the invention advantageously possesses low viscosity which allows it to be applied at low temperature (such as for example below 165°C, even more preferably below 150°C). This advantageously allows reducing the energy consumption, and improving productivity. More particularly, the hot melt pressure sensitive adhesive composition may be coated at lower temperature than traditional HMPSA, for example at 10 to 20°C lower than traditional HMPSA.

Preferably, the hot melt pressure sensitive adhesive composition is a low application temperature hot melt pressure sensitive adhesive.

The hot melt pressure sensitive adhesive of the present invention may be advantageously applied at a temperature lower than 10°C compared to typical hot melt pressure sensitive adhesive, preferably at a temperature lower than 20°C.

Viscoelastic behavior of hot-melt pressure sensitive adhesives at a given temperature is conveniently captured by the two dynamic moduli known as G' and G": the loss modulus G" indicating the viscous behavior, and the storage modulus G' indicating elastic behavior. The ratio of G" and G' is known as the loss factor Tangent delta (Tan δ).

The hot melt pressure sensitive adhesive composition of the present invention advantageously exhibits high tan delta value at different temperatures, more preferably at service temperature (24°C). It preferably exhibits a tan delta higher than tan delta of compared hot melt pressure sensitive adhesive devoided of the combination thermoplastic polyurethane and styrene block copolymer.

Viscous nature is the direct indication of wettability (or wetting) as against its opposite parameter elastic modulus. Elastic nature is typically the indication of resistance to deformation. Thus, the increase of the tan delta advantageously allows the decrease of the resistance to deformation, which means that the adhesive can advantageously be easily deformed, and cut, and also can easily penetrate and wet the substrate surface.

The hot melt pressure sensitive adhesive preferably exhibits a tan delta at 24°C higher than or equal to 1.4, more preferably higher than or equal to 1.8, and even more preferably higher than or equal to 2.0.

The tan delta may be measured by dynamical mechanical analysis (DMA). Preferably, the method of measure is as disclosed in the experimental part.

The hot melt pressure sensitive adhesive composition preferably comprises:
- from 1% to 60% by weight of styrene block copolymer(s);
- from 1% to 55% by weight of the thermoplastic polyurethane(s);
- from 20% to 60% by weight of tackifier(s);
- from 0% to 40% by weight of plasticizer(s);
- from 0% to 5% by weight of stabilizer(s);

Even more preferably, the hot melt pressure sensitive adhesive composition comprises:
- from 10% to 40% by weight of styrene block copolymer(s);
- from 1% to 20% by weight of thermoplastic polyurethane(s);
- from 40% to 60% by weight of tackifier(s);
- from 2% to 35% by weight of plasticizer(s);
- from 0% to 3% by weight of stabilizer(s);
- from 0% to 5% by weight of other additive(s).

The hot melt pressure sensitive adhesive composition of the present invention advantageously exhibits at least one of the following properties:
- reduced viscosity enabling coating at lower application temperature for the label producers (for example at temperature lower than or equal to 165°C, preferably lower than or equal to 160°C). This property advantageously allows reducing energy. consumption, increasing the productivity, easing the processability (coating). The viscosity may be lowered up to 40%, preferably up to 50% compared to typical hot melt pressure sensitive adhesive devoided of thermoplastic polyurethane.
- increased tan delta which advantageously allows ease the deformation and cut, but also the penetration and wetting of the substrate surface.
- good wettability, more particularly good wettability on paper substrates. It advantageously allows improving the adhesive properties, especially on paper substrates, or even more preferably on Kraft paper substrates. The wettability is the ability of the adhesive to wet and penetrate the substrate so that the instant bonding is formed.
- improved die-cutting performances. It advantageously allows reaching high die-cutting speed/converting speed, preferably higher or equal to 100 m/min, even more preferably higher or equal to 120 m/min. This property advantageously allows improving production processes for the converter, and improving productivity.
- Higher loss modulus.
- good compromise between good die-cutting performances, good rheological properties, and good adhesive properties.
- good properties mentioned above at advantageously lower coat weight, for example at 15 to 16 GSM.
- particularly suitable for use in labels on both paper and synthetic substrates.

### Process for preparing the hot melt pressure sensitive adhesive composition

The invention also relates to a process for preparing the hot melt pressure sensitive adhesive composition as described above.

The hot melt pressure sensitive adhesive composition may be prepared by mixing the at least one styrene block copolymer, the tackifier, and the thermoplastic polyurethane, in the molten state. Optional other ingredients or additives of the composition, as described above, may be mixed with the abovementioned components.

The hot melt pressure sensitive adhesive composition of the present invention may be produced using any of the techniques known in the art. Preferably, the step of mixing is carried out at a temperature of from 23°C to 170°C. The ingredients are preferably mixed for at least several hours, typically at least 2 hours, and preferably from 2 to 6 hours, at a temperature ranging from 150°C to 200°C.

The hot melt pressure sensitive adhesive composition according to the invention can be prepared in presence of dioxygen (such as under air atmosphere), or preferably under inert atmosphere *e.g*. under carbon dioxide or nitrogen to limit potential degradation by oxidative reactions.

### Uses

The invention also relates to the use of the hot melt pressure-sensitive adhesive composition as described above, for bonding two substrates.

The present invention also concerns a multilayer system comprising:
- an adhesive layer (A') consisting of the HMPSA composition as disclosed herein;
- a support layer (B') adjacent to the adhesive layer (A'); and
- a nonstick protective layer (C'), adjacent to the adhesive layer (A').

### Adhesive layer (A'):

The thickness of the adhesive layer (A') is preferably strictly greater than 10 µm, more preferably within a range of from 10 to 150 µm, more preferably from 10 to 130 µm, and even more preferably from 10 to 60 µm.

### Support layer (B'):

The support layer (B') included in the multilayer system according to the invention is adjacent to the adhesive layer (A').

Layer (B') preferably consists of paper or of a film comprising one or more homogeneous layers of a polymer.

Among the suitable polymers, mention may be made of polyolefins, such as polyethylene, including high-density polyethylene, low-density polyethylene, linear low-density polyethylene and linear ultra-low-density polyethylene; polypropylene and polybutylenes; polystyrene; natural or synthetic rubber; vinyl copolymers, such as polyvinyl chloride, which may or may not be plasticized, and poly(vinyl acetate); olefinic copolymers, such as ethylene/methacrylate copolymers, ethylene/vinyl acetate copolymers, acrylonitrile/butadiene/styrene copolymers, and ethylene/propylene copolymers; acrylic polymers and copolymers; polyurethanes; polyethers; polyesters; and mixtures thereof.

Preferably, the support layer (B') is based on paper.

The support layer (B') is preferably a printable support layer.

### Nonstick protective layer (C'):

The protective nonstick layer (C') can be easily removed without modifying the layer (A'), which remains attached to the support layer (B').

According to a preferred embodiment, said layer (C') comprises a silicone-based material, said material either constituting said layer (C'), or being present in the form of a surface coating of said layer (C'), said coating being intended to be in contact with the adhesive layer (A').

Preferably, the layer (C') is a silicone-based material coated paper substrate.

According to a preferred embodiment of the multilayer system according to the invention, said system is packaged in the form of a winding around a reel (or roll), the dimensions of which can vary within a wide range. Thus, the diameter of such a roll may range from 0.25 to 1 m, and its width from 0.25 to 2 m.

According to this preferred embodiment, the protective nonstick layer (C') consists of the support layer (B') included in the multilayer system, wherein the face which is opposite the face in contact with the adhesive layer (A') is coated with a silicone-based material. Such a multilayer system in which the protective nonstick layer (C') is not distinct from the layer (B') is sometimes denoted by the name "linerless". Said packaging is particularly advantageous, because of its simplicity and the resulting economy, for converters who convert these roll stocks into final self-adhesive articles, such as labels or self-adhesive tapes.

The HMPSA composition is in particular applied in the melt state at a temperature above 130°C on the support layer (B') in an amount which is strictly greater than 10 g/m² and which generally ranges from 10 to 150 g/m², preferably from 10 to 35 g/m², to form the adhesive layer (A').

The application is carried out by known coating techniques such as for example lipped-nozzle coating (at a temperature of around 120°C to -180°C) or curtain coating (at a temperature of around 120°C to 180°C). The HMPSA is generally applied by a lipped nozzle onto the nonstick protective layer (C'), the assembly then being laminated to the support layer (B') (transfer coating). The application of the HMPSA by curtain coating may be carried out directly on the support layer (B'), depending on the coating temperature.

The present invention also relates to the use of the multilayer system as defined above (or the HMPSA as defined above) for the manufacture of self-adhesive articles, such as self-adhesive labels and adhesive tapes, preferably self-adhesive labels.

The present invention also relates to the self-adhesive articles, such as for example self-adhesive labels and adhesive tapes, comprising the multilayer system as disclosed above.

Another subject of the invention is a self-adhesive article capable of being obtained by conversion of the multilayer system described above. In this case, a printable support layer (B') is preferred.

The present invention also relates to a self-adhesive label capable of being obtained by a conversion process, said conversion process preferably comprising:
- a step of printing onto the printable support layer (B'), then
- a step of die-cutting the multilayer system; then
- a step (termed " stripping") of obtaining a multilayer system, wherein the unchanged nonstick protective layer (C') is preferably bonded just to the part of the printed support layer that corresponds to the shape and dimensions of the self-adhesive label designed for its final use. This step therefore typically consists in removing the undesirable part of the printable support layer (B') and of the adhesive layer (A'), said part often being termed the "backbone of the label" or the "matrix".

The latter multilayer system is employed on lines for packaging articles to be labeled, such as, for example, packages, by means of automated systems which separate the self-adhesive labels from the protective layer, and attach them to the articles to be labeled. The labeled article is preferably a package, a bag or container consisting of:
- glass;
- a usual plastic material chosen from polyethylene terephthalate (PET), polyvinyl chloride (PVC), polyethylene (PE), in particular high-density polyethylene (HDPE), or else polypropylene (PP); or
- cardboard, such as for example the cardboard known under the name FIPAGO cardboard (name originating from the Fédération Internationale des fabricants de PApiers GOmmés (International Federation of the Manufacturers of Gummed Papers), of Kraftliner grade and weight per unit area 200 g/m²;
- Kraft paper.

The present invention also concerns the use of a thermoplastic polyurethane for improving the die-cutting performances, and more particularly die-cutting speed of a multilayer system comprising a hot melt pressure sensitive adhesive composition.

The thermoplastic polyurethane is more particularly used in the hot melt pressure sensitive adhesive composition.

The hot melt pressure sensitive adhesive composition preferably comprises a styrene block copolymer (C).

Preferably, the hot melt pressure sensitive adhesive composition is the one disclosed above. The preferred embodiments disclosed above apply for the present use.

Advantageously, the die-cutting speed is higher than or equal to 100m/min, more preferably higher or equal to 110m/min.

The present invention also relates to the use of the hot melt pressure sensitive adhesive composition as disclosed herein for improving the die-cutting performances, and more particularly die-cutting speed.

Advantageously, the die-cutting speed is higher than or equal to 100m/min, more preferably higher or equal to 110m/min.

The description, embodiments and preferred embodiments disclosed herein for hot melt pressure sensitive adhesive composition and multilayer system apply to these uses without the need to repeat it.

The present invention also concerns the use of the hot melt pressure sensitive adhesive composition as disclosed herein or of the self-adhesive article as disclosed herein, for tamper proof closing of a package, bag or container, for example on paper package, bag or substrate, in particular on Kraft paper.

The present invention also concerns the use of the hot melt pressure sensitive adhesive composition as disclosed herein for of the self-adhesive article as disclosed herein, for tamper proof closing of courier bag or envelope.

According to the present invention, by « comprised between x and y », or « ranging from x to y », it is meant a range wherein limits x and y are included. For example, the range "comprising between 1% and 3%" includes in particular 1% and 3%.

The following examples are given purely by way of illustration of the invention and should not, under any circumstances, be interpreted as limiting the scope thereof.

### EXPERIMENTAL PART

The following materials were used:
- Irganox^{®} 1010 (tetrakis(methylene(3,5-di-ter-butyl-4-hydroxyhydrocinnamate))methane) from BASF - antioxidant;
- Irgafos^{®} 168 (tris(2,4-di-tert.-butylphenyl)phosphite) from BASF - antioxidant;
- KN4010 (naphtenic oils) from Petrochina Karamay Petrochemical Co. LTD;
- Poweroil Pearl HN 500A (naphtenic oils) from APAR;
- Quintone^{®} D100 commercialized by ZEON CHEMICAL : C9-modified C5 hdyrocarbon resin;
- HAITACK^{™} JH-3204 sold by Ningbo Jinhai Chenguang Chemical Corporation (C5 aliphatic resin);
- HAITACK^{™} JH-3200 sold by Ningbo Jinhai Chenguang Chemical Corporation (aromatic modified C5 aliphatic resin);
- Plastolyn^{®} P290 (aromatic hydrocarbon resin) sold by EASTMAN;
- KB100S : rosin ester sold by GUANGDONG KOMO CO., LTD;
- FJ-146P from FWU JI RESINS CHEMICALS (polyester based aromatic thermoplastic polyurethane);
- SIS^{®}1124 sold by SINOPEC (linear styrene-isoprene-styrene block copolymer having a styrene content ranging of 14% by weight and a diblock content of 25% by weight);
- JH 8161 sold by Ningbo Jinhai Chenguang Chemical Corporation (linear styrene-isoprene-styrene block copolymer having a styrene content ranging of 16% by weight and a diblock content of 50% by weight).

### Method measure of viscosity

The viscosity was measured according to ASTM D 3236 using a Brookfield viscometer with Spindle 27, at different temperature 150°C, 160°C and 170°C.

### Measure of the softening point

The softening point is measured by using the ASTM E28 standard.

### Measure of Gardner color

The Gardner color of a composition is tested according to ASTM D-1544 (50% in toluene).

### Example 1 : preparation of the hot melt pressure sensitive adhesives

The hot melt pressure sensitive adhesive compositions in Table 1 below are prepared by mixing of its ingredients in the following order:
Melting of the tackifying resin at a temperature 100-120°C, then addition of the polymer and heating up to 160-170°C while mixing. Then the other ingredients are added, and the mixture was mixed for several hours, before letting cool the mixture to 23°C.

**Table 1 : hot melt pressure sensitive adhesive compositions**

| **Raw material** | **HM1 (comparative)** | **HM2 (invention)** | **HM3 (invention)** | **HM4 (invention)** |
|---|---|---|---|---|
| HN 500A | 16.5 | 16.5 | 16.5 | - |
| KN 4010 | - | - | - | 16.2 |
| Quitone^{®} D100 | - | - | - | 53 |
| JH 3204 | 21.6 | 21.6 | 21.6 | - |
| JH 3200 | 28.9 | 28.9 | 28.9 | - |
| KB100S | 6.0 | 6.0 | 6.0 | - |
| Plastolyn^{®} P290 | - | - | - | 2.0 |
| FJ 146P | - | 1.0 | 6.5 | 6.5 |
| SIS 1124 | 26 | 25 | 19.5 | - |
| JH-8161 | - | - | - | 21.5 |
| IRGANOX^{®} 1010 | 0.5 | 0.5 | 0.5 | 0.4 |
| IRGAFOS^{®} 168 | 0.5 | 0.5 | 0.5 | 0.4 |

### Example 2 : properties

### Dynamical Mechanical Analysis (DMA):

The apparatus used for the tests is DHR-2 (Discovery Hybrid Rheometer-2) from TA instruments.

In this rheometer, a shear stress is applied on the adhesive (sample) in the form of oscillation to reach the defined strain %.

One of the test conducted is a Tscan (temperature scan). In this test, the temperature is varied by keeping the angular frequency and the strain (%) constant. It allows indicating how the adhesive performs in response with temperature. The temperature was set to 140°C, and decreased with a ramp rate of 5°C/min from 140°C to 40°C (angular frequency = 10 rad/s, and strain = 5%), then of 2°C/min from 40°C to -15°C (angular frequency = 10 rad/s and strain = 0.1%).

The other test conducted is a Frequency scan. In this test, the angular frequency is varied by keeping the temperature and the strain (%) constant. The temperature is 30°C and the strain is 5%. The angular frequency was varied from 63.1 rad/s to 0.1 rad/s.

During the tests, the following properties were measured: storage modulus (G'), loss modulus (G"), Tg, Loss factor (Tan delta)

General protocol : the adhesives were placed between a Peltier plate acting as lower, fixed place and a top plate with a radius R of 12.5 mm which was connected to the drive shaft of a motor to generate the shear stress. The Peltier plate controls the temperature of the material (+/- 0.5°C): The testing was done with a 25 mm parallel plate, with 1.0 g of adhesive.

Test execution :
- after GAP 0 at 140°C, setting Peltier at 140°C
- after zero gap, placing the sample (1g of adhesive) on 140°C heated Peltier plate, which act as fixed bottom plate
- once the sample is melted, bringing the top plate in contact with the melted sample
- lowering the top plate to the distance of about 1 250 µm manually
- removing excessive material
- lowering the top plate to a gap of 1000 µm
- setting the temperature for Tscan to a start temperature of 140°C, and decreased with a ramp rate of 5°C/min from 140°C to 40°C (angular frequency = 10 rad/s, and strain = 5%), then of 2°C/min from 40°C to -15°C (angular frequency = 10 rad/s and strain = 0.1%).
- After completing the test, melting the adhesive, lifting the top plate and removing the adhesive from both the Peltier plate and the top plate,
- Setting the temperature back to room temperature

Result: Tx was measured by measuring the crossover temperature between storage modulus and loss modulus for temperature higher than 50°C. Tg was measured by measuring the temperature at the maximum of loss factor for temperature lower than 50°C

| | **Parameters** | **Unit** | **HM1 (comparative)** | **HM2 (invention)** | **HM3 (invention)** | **HM4 (invention)** |
|---|---|---|---|---|---|---|
| **1** | **Viscosity @ 150°C** | **m.Pas** | 15500 | 15125 | 7600 | 8525 |
| | **Viscosity @ 160°C** | **m.Pas** | 9325 | 8925 | 4600 | 5450 |
| | **Viscosity @ 170°C** | **m.Pas** | 6625 | 6250 | 3400 | 3875 |
| **2** | **Softening point** | **°C** | 98 | 95.5 | 90 | 93 |
| **3** | **Gardner color** | **GC#** | 3.5 | 3.9 | 3.9 | 4.0 |
| **4** | **Temperature scan - Tg** | **°C** | 8.3 | 9.1 | 14.6 | 17.1 |
| | **Temperature scan - Tx** | **°C** | 106.1 | 104.8 | 100.6 | 99.8 |
| **5** | **Temperature scan - G'@24°C** | **Pa** | 37517 | 41011 | 45771 | 75185 |
| | **Temperature scan - G"@24°C** | **Pa** | 48680 | 59142 | 114420 | 207352 |
| | **Temperature scan - Tan δ@24°C** | --- | 1.300 | 1.42 | 2.500 | 2.760 |
| **6** | **Frequency Scan - Tan δ @ 0.1 rad/s** | --- | 0.220 | 0.294 | 0.380 , | 0.714 |
| | **Frequency Scan - Tan δ @ 1 rad/s** | --- | 0.448 | 0.466 | 0.794 | 1.060 |
| | **Frequency Scan - Tan δ @ 10 rad/s** | --- | 0.942 | 1.010 | 1.900 | 2.420 |
| | **Frequency Scan - Tan δ @ 63.1 rad/s** | --- | 2.140 | 2.190 | 3.320 | 3.350 |

The hot melt pressure sensitive adhesive compositions HM2, HM3 and HM4 exhibit advantageously a higher loss Modulus G" at 24°C (service temperature), and a higher elastic modulus G' at 24°C, than the comparative adhesive HM1 which does not comprise a thermoplastic polyurethane.

More particularly, the values are even higher with HM3 and HM4 which comprise up to 6.5% by weight of thermoplastic polyurethane.

The tan delta of the hot melt pressure sensitive adhesives HM2, HM3 and HM4 are advantageously higher than the tan delta of comparative composition HM1. The increase is even more for HM3 and HM4. This increase in tan delta demonstrates the better deformation performances for HM2, HM3 and HM4 compared to comparative HM1, which implies better die-cutting performances and better wettability to substrate.

A increase of the tan delta is also observed at various oscillation frequencies (at T = 30°C) : 0.1 rad/s to 63.1 rad/s.

The viscosities of HM2, HM3 and HM4 are lower than those of comparative HM1. It means that HM2, HM3 and HM4 can advantageously be coated at lower temperature than HM1.

The softening temperature of HM2, HM3 and HM4 are advantageously nearly similar than the softening temperature of HM1. There is no negative impact on the presence of thermoplastic polyurethane. The same applies for the Gardner color.

### Example 3 : die-cutting

The die-cutting performances of the hot melt pressure sensitive adhesive HM1 and HM3 were also tested on a printing die-cutting machine.

The coating machine is a Valco Melton P1100 semi-automatic coater (tank of 160L, 3 zone heating tank), with following properties:
- Hose length: 5 m
- Slot: 1100mm 5 zone heating element with online add on measurement.
- Coating method: Transfer coating.

Several multilayer systems were prepared with different support layers:
1. Liner: Silicone coated 60gsm Glassine - Release value: 8gmf/25mm
2. Support layers:
   - Sample 1: 80 GSM Chromo Paper
   - Sample 2: 80 GSM silver metalized paper
   - Sample 3: 58 Micron White PP
   - Sample 4: 75 Micron Metallized BOPP

The machine was set for 15GSM-16GSM Add on, with both compositions HM1 and HM3.

| HM1 setting (±5°C) | HM3.setting (±5°C) |
|---|---|
| Tank : 150°C | Tank: 130°C |
| Hose: 160°C | Hose: 135°C |
| Slot: 170°C | Slot: 140°C |

For the die-cutting step, the Machine used is Multitech with two different dies:
- Die 1: with 3mm bleed margin; 1.5mm perforation margin
- Die 2: with 2mm bleed margin with sharp nick

The results on speed stabilization are as follow:

| **Samples** | **Die** | **Machine Limit Max** | **HM1 (without TPU** - **comparative)** | **HM3 (6.5% TPU, invention)** |
|---|---|---|---|---|
| Samples 1 to 4 | Die 1 | Max of 120m/min | Speed up to 80m/min | Speed up to 120m/min |
| Samples 1 to 4 | Die 2 | Max of 120m/min | Speed up to 70m/min | Speed up to 120m/min |

The hot melt adhesive composition HM3 advantageously allows to reach higher die-cutting speed than with HM1. The results are consistent for the different samples 1 to 4 which comprise different support layer, and with different die forms (die 1 or die 2).

### Example 4 : peel tests

### Measure of the peel

The adhesive strength of the hot melt pressure sensitive adhesive compositions is evaluated by the 180° peel test on a plate of a certain substrate, as described in the FINAT test method No. 1, published in the FINAT Technical Handbook, 6th edition, 2001. FINAT is the International Federation of Self-Adhesive Label Manufacturers and Converters.

The principle of this test is as follows: A support layer consisting of Kraft paper of 120 µm thick is precoated with the HMPSA in an amount of about 100 g/m².

A test specimen in the form of a rectangular strip (25.4 mm x 175 mm) is cut from the self-adhesive support thus obtained. This test specimen is fastened to a plate consisting of a certain substrate. The assembly obtained is left at ambient temperature for 20 minutes. It is then introduced into a tensile testing device capable of performing the peeling or detachment of the strip at an angle of 180° and with a separation speed of 300 mm per minute. The device measures the force required to detach the strip under these conditions.

The result is expressed in N/2.54 cm.

| | | **HM1** | **HM4** |
|---|---|---|---|
| **180° Peel strength** | | No fiber tear | Complete fiber tear |

The fiber tear is the desired results in Kraft paper peel testing. When the adhesive strength is high and adhesive anchor to the Kraft paper well, the paper will tear (fiber tear), if tried to open at 300 mm/min.

When the adhesive strength or Anchorage is not well, paper will not tear, if tried to open at 300 mm/min.

HM4 advantageously provides complete fiber tear compared to comparative HM1 which leads to no fiber tear.

## Claims

1. Hot melt pressure-sensitive adhesive composition comprising:
- at least one styrene block copolymer (C);
- a thermoplastic polyurethane ; and
- a tackifying resin.

2. Hot melt pressure-sensitive adhesive composition according to claim 1, wherein the styrene block copolymer (C) comprises, preferably consists essentially of, and more preferably consists of:
• at least one linear styrene block copolymer (C1); and
• optionally at least one styrene diblock copolymer (C2).

3. Hot melt pressure-sensitive adhesive composition according to anyone of claim 1 or 2, wherein the diblock content ranges from 5% to 90 % by weight, preferably from 10% to 80% by weight, more preferably from 20% to 70% by weight based on the total weight of styrene block copolymer (C).

4. Hot melt pressure-sensitive adhesive composition according to anyone of claims 1 to 3, wherein the styrene block copolymer (C) has a styrene content ranging from 2% to 50% by weight, preferably from 5% to 40% by weight, and more preferably from 10% to 30% by weight based on the total weight of said styrene block copolymer (C).

5. Hot melt pressure-sensitive adhesive composition according to anyone of claims 1 to 4, wherein the styrene block copolymer (C) is selected from the group consisting of styrene-butadiene (SB), styrene-butadiene-styrene (SBS), styrene-isoprene block (SI), styrene-isoprene-butadiene-styrene (SIBS), styrene-isoprene-styrene (SIS), styrene-ethylene-butylene-styrene (SEBS), styrene-ethylene-propylene-styrene (SEPS), styrene-ethylene-butylene (SEB), styrene-ethylene-propylene (SEP), styrene-isobutylene-styrene, and combinations thereof, more preferably a mixture SIS and SI.

6. Hot melt pressure-sensitive adhesive composition according to anyone of claims 1 to 5, wherein it comprises from 1% to 60% by weight of styrene block copolymer(s), preferably from 5% to 50% by weight, more preferably from 10% to 40% by weight, based on the total weight of said hot melt pressure sensitive adhesive composition.

7. Hot melt pressure-sensitive adhesive composition according to anyone of claims 1 to 6, wherein the thermoplastic polyurethane is the reaction product of at least one polyol, at least one polyisocyanate, and optionally at least one chain extender; the polyisocyanate being preferably an aromatic polyisocyanate more preferably selected from toluene diisocyanate, diphenylmethane diisocyanate, and mixtures thereof.

8. Hot melt pressure-sensitive adhesive composition according to anyone of claims 1 to 7, wherein the thermoplastic polyurethane is selected from polyester-based polyurethanes.

9. Hot melt pressure-sensitive adhesive composition according to anyone of claims 1 to 8, wherein the thermoplastic polyurethane has a,Melt flow Index (MFI) ranging from 5 to 25 g/10 min, preferably from 8 to 22 g/10 min.

10. Hot melt pressure-sensitive adhesive composition according to anyone of claims 1 to 9, wherein it comprises from 1% to 55% by weight of the thermoplastic polyurethane (or of the mixture of thermoplastic polyurethanes in case a plurality of thermoplastic polyurethanes is present in the hot melt pressure sensitive adhesive composition), preferably from 2% to 40% by weight, even more preferably from 4% to 30% by weight, and event more advantageously from 4% to 20% by weight based on the total weight of said hot melt pressure sensitive adhesive composition.

11. Hot melt pressure-sensitive adhesive composition according to anyone of claims 1 to 10, wherein the tackifying resin is selected from the group consisting of:
- i) Aliphatic and cycloaliphatic petroleum hydrocarbon resins, resulting from the polymerization of monomers consisting primarily of aliphatic or cycloaliphatic olefins and di-olefins, and the hydrogenated derivatives thereof;
- ii) Aromatic petroleum hydrocarbon resins and the hydrogenated derivatives thereof;
- iii) Aromatic-modified cycloaliphatic and aromatic-modified aliphatic petroleum hydrocarbon resins, and the hydrogenated derivatives thereof;
- vii) Natural and modified rosin (*for example* gum rosin, wood rosin, tall-oil rosin, distilled rosin, hydrogenated rosin, dimerized rosin, polymerized rosin, rosin esters and their hydrogenated derivatives);
- viii) Glycerol and pentaerythritol esters of natural and modified rosin (*for example* the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall-oil rosin, and the phenolic modified pentaerythritol ester of rosin); and
- ix) Mixtures thereof.

12. Hot melt pressure-sensitive adhesive composition according to anyone of claims 1 to 11, wherein it has a glass transition temperature ranging from 5°C to 20°C, preferably from 10°C to 20 °C.

13. Hot melt pressure-sensitive adhesive composition according to anyone of claims 1 to 12, wherein it has a viscosity at 160°C ranging from 500 to 40 000 mPa.s, preferably ranging from 500 to 10 000 mPa.s, and even more preferably ranging from 1 000 to 6 000 mPa.s.

14. Hot melt pressure-sensitive adhesive composition according to anyone of claims 1 to 13, comprising:
- from 10% to 40% by weight of styrene block copolymer(s);
- from 1% to 20% by weight of thermoplastic polyurethane(s);
- from 40% to 60% by weight of tackifier(s);
- from 2% to 35% by weight of plasticizer(s);
- from 0% to 3% by weight of stabilizer(s);
- from 0% to 5% by weight of other additive(s);
based on the total weight of the hot melt pressure sensitive adhesive composition.

15. A multilayer system comprising:
- an adhesive layer (A') consisting of the hot melt pressure sensitive adhesive composition as defined in anyone of claims 1 to 14;
- a support layer.(B') adjacent to the adhesive layer (A'); and
- a nonstick protective layer (C'), adjacent to the adhesive layer (A').

16. Use of the multilayer system as defined in claim 15, or of the hot melt pressure sensitive adhesive composition as defined in anyone of claims 1 to 14, for the manufacture of self-adhesive articles, such as for example self-adhesive labels and adhesive tapes, preferably self-adhesive labels.

17. Self-adhesive label capable of being obtained by conversion of the multilayer system as defined in claim 15, the conversion process preferably comprising:
- a step of printing onto the printable support layer (B'), then
- a step of die-cutting the multilayer system; then
- a step (termed " stripping") of obtaining a multilayer system.

18. Use of a thermoplastic polyurethane for improving the die-cutting performances, and more particularly die-cutting speed of a multilayer system comprising a hot melt pressure sensitive adhesive composition.

19. Use of the hot melt pressure sensitive adhesive as defined in anyone of claims 1 to 14, for tamper proof closing of a package, bag or container, for example on paper package, bag or substrate, in particular on Kraft paper.
